# EUROPÄISCHE PATENTSCHRIFT

(11) **EP 0 606 048 B1**
(45) Veröffentlichungstag und Bekanntmachung des Hinweises auf die Patenterteilung: **23.10.1996**
(21) Anmeldenummer: 93810904.8
(22) Anmeldetag: 23.12.1993
(51) Int. Cl.: F15B 13/00, F16K 27/00

(54) **Fluidische Ventileinheit**
Fluid valve assembly
Distributeur fluidique

(30) Priorität: 06.01.1993 CH 27/93
(43) Veröffentlichungstag der Anmeldung: 13.07.1994
(73) Patentinhaber: IMI Norgren AG, CH-8362 Balterswil (CH)
(72) Erfinder: Gemperle, Bruno, CH-8371 Oberwangen (CH); Bieri, Alois, CH-8362 Balterswil (CH)
(74) Vertreter: Groner, Manfred

(56) Entgegenhaltungen:
- EP-A- 0 442 033
- DE-A- 3 910 913
- FR-A- 2 504 610
- US-A- 4 726 393
- US-A- 4 770 210

## Beschreibung

Die Erfindung betrifft eine fluidische Ventileinheit mit einem E-P-Wandler zum Betätigen eines Wegeventils, das auf einer fluidische Kanäle aufweisenden Grundplatte angeordnet ist, welche Grundplatte Mittel zum verbinden mit weiteren Grundplatten aufweist und in der elektrische Versorgungs- und/oder elektrische Steuerleitungen verlaufen und diese Leitungen Mittel zum elektrischen Verbinden mit Leitungen angeschlossener Grundplatten aufweist.

Eine Ventileinheit nach der DE-A-39 10 913 weist einen pneumatischen oder hydraulischen Ventilblock auf, der auf einem Anschlussblock aufgesetzt ist. Zwischen dem Ventilblock und dem Anschlussblock ist eine Leiterplatte angeordnet. An gegenüberliegenden Stirnseiten des Ventilblocks sind elektromagnetische Betätigungsblöcke montiert, von denen sich Anschlusskontaktstifte nach unten erstrecken und in die genannte Leiterplatte eingreifen. Auf der Unterseite dieser Leiterplatte ist eine Steckkupplung angebracht, in die im montierten Zustand ein Stecker einer im Anschlussblock angeordneten weiteren Leiterplatte eingreift.

Bekannt sind auch fluidische Anschlussleisten, auf denen mehrere Magnetventile montiert werden können und deren Magnetspulen elektrisch einzeln mit Steckern oder gemeinsam mit einem Sammelstecker angeschlossen werden. Der Sammelstecker muss jeweils individuell für die vorgesehene Anzahl Ventile hergestellt werden. Bei dieser Anschlussleiste besteht die Schwierigkeit, dass das Wechseln eines Ventils sehr aufwendig sein kann und ein vergleichsweise hoher Montageaufwand erforderlich ist.

Der Erfindung liegt die Aufgabe zugrunde, eine Ventileinheit der genannten Art zu schaffen, die einfacher und günstiger herstellbar ist und die sich trotzdem durch eine hohe Flexibiltät auszeichnet. Die Aufgabe ist bei der gattungsgemässen Ventileinheit dadurch gelöst, dass der E-P-Wandler in der Grundplatte oder einer seitlichen Erweiterung der Grundplatte angeordnet und mit den elektrischen Versorgungs- und/oder Steuerleitungen, der fluidischen Versorgungsleitung und einer zur Anschlussstelle des Wegeventils führenden fluidischen Steuerleitung verbunden ist. Ein besonderer Vorteil der fluidischen Ventileinheit wird darin gesehen, dass zwischen dem Wegeventil und der Grundplatte nur eine Schnittstelle und zwar eine fluidische erforderlich ist. Diese fluidische Schnittstelle lässt sich sehr einfach gestalten und ermöglicht die Herstellung einer Ventileinheit, die günstiger und technisch leichter handhabbar ist. Durch die Anordnung des E-P-Wandlers in der Grundplatte ist eine sehr kompakte Bauweise möglich, die nicht durch besondere zusätzliche Massnahmen gegen berühren und eindringen von Feuchtigkeit geschützt werden muss. Dadurch können auch wesentliche Herstellungskosten eingespart werden. Eine besonders geringe Bauhöhe der Grundplatte ist dann möglich, wenn der E-P-Wandler in einer seitlichen Erweiterung der Grundplatte angeordnet ist. In diesem Fall lassen sich zudem Verbindungen zu Sensoranschlüssen besonders einfach realisieren und sind die pneumatischen und elektrischen Komponenten klar getrennt. Schliesslich wird bei dieser Variante die bessere Zugänglichkeit bei Unterhaltsarbeiten und die Möglichkeit einer regionalen Konfiguration (Endmontage) von E-P-Wandler-Leiterplatten-Modulen bei verschiedenen elektrischen Spannungen als besonders vorteilhaft angesehen.

Nach einer Weiterbildung der Erfindung ist der E-P-Wandler direkt mit einer Leiterplatte elektrisch verbunden. Auf dieser Leiterplatte können sehr einfach auch sämtliche Buchsen und Stecker für das Verbinden mit weiteren Leiterplatten untergebracht werden. Es besteht auch die Möglichkeit, Funkenlöschglieder und Schaltanzeigen auf der Leiterplatte anzubringen. Nach einer weiteren Ausführungsvariante ist die genannte Leiterplatte als busfähige Leiterplatte ausgebildet. Für die Steckverbindung zwischen den Leiterplatten wären dann lediglich noch vier elektrische Kontakte erforderlich.

Besonders wirtschaftlich ist eine Ausführungsvariante, bei der die Zuführung des Fluids zum E-P-Wandler durch eine Dichtung zwischen benachbarten Grundplatten erfolgt. Vorteilhafte Weiterbildungen und Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnungen näher erläutert. Es zeigen:
- Fig. 1: eine perspektivische Ansicht einer erfindungsgemässen Ventileinheit, wobei aus Gründen der Darstellung Teile weggebrochen sind,
- Fig. 2: eine teilweise geschnittene Ansicht der Ventileinheit gemäss Fig. 1,
- Fig. 3: ein Schnitt durch einen Teil einer erfindungsgemässen Ventileinheit entlang der Linie III-III der Fig. 1, und
- Fig. 4: eine Teilansicht einer Ventileinheit nach einer Variante.

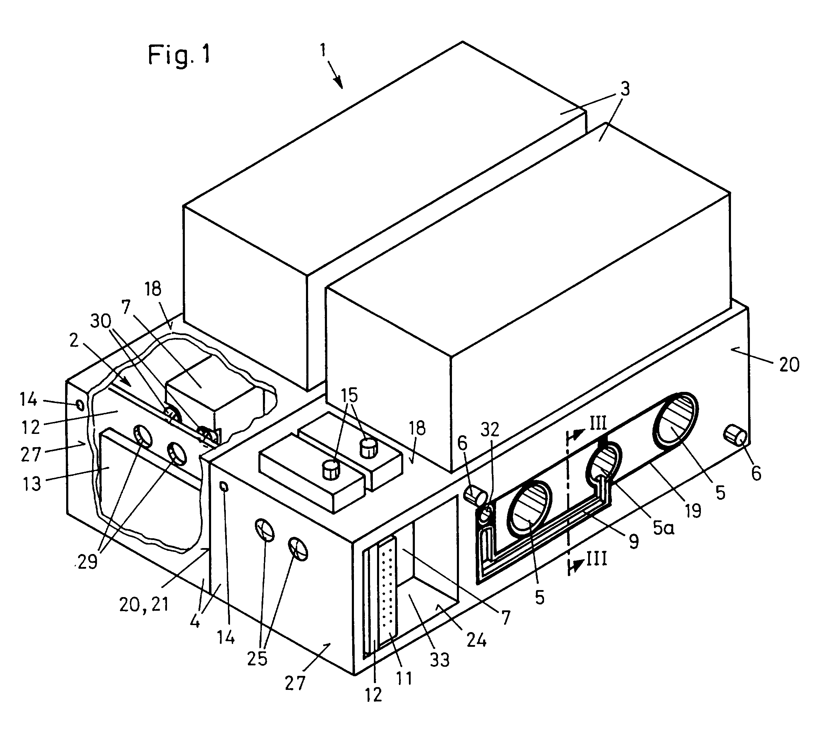

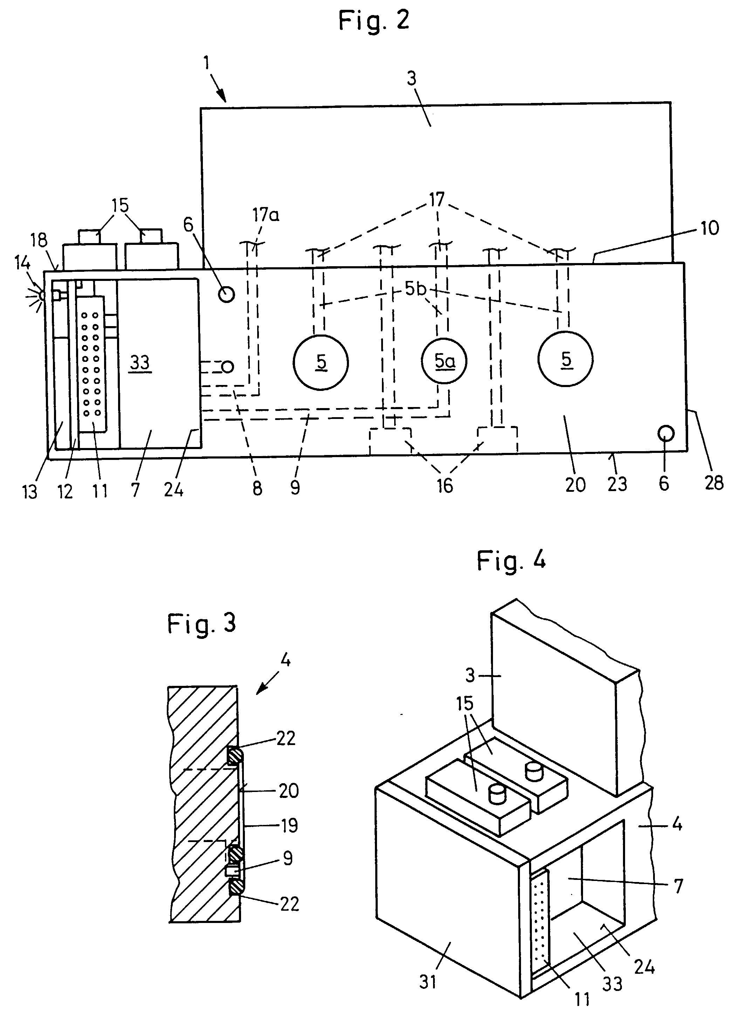

Die in der Fig. 1 gezeigte Ventileinheit 1 weist zwei gleiche fluidische Wegeventile 3 auf, die jeweils an einer Oberseite 18 einer Grundplatte 4 angeflanscht sind. Die beiden Grundplatten 4 sind unter Zwischenlage einer Dichtung 19 an Seitenflächen 20 und 21 aneinander angelegt und mit hier nicht gezeigten mechanischen Verbindungsmitteln in bekannter Weise miteinander verbunden. Die Dichtung 19 ist gemäss Fig. 3 in eine in die Seite 20 eingearbeitete Nut eingelegt und besteht aus einem geeigneten elastischen Werkstoff. Jede Grundplatte 4 weist weiterhin auf der Seite 20 elektrische Verbindungsmittel 11 in der Form von Buchsen auf. Die Gegenseite 21 weist hier nicht gezeigte entsprechende Stecker auf, die in die Buchsen der anliegenden Grundplatte 4 eingreifen. Die in Fig. 1 gezeigten Grundplatten 4 sind somit durch die Verbindungsmittel 11 elektrisch miteinander verbunden. Damit beim Zusammenfügen der Grundplatten 4 die elektrische Verbindung einfacher herstellbar ist, sind auf der Seite 20 jeweils Führungsstifte 6 und auf der Seite 21 hier nicht gezeigte entsprechende Führungsöffnungen vorgesehen. Da jede Grundplatte 4 jeweils eine Seitenfläche 20 mit einer Dichtung 19 sowie eine parallele Seitenfläche 21 aufweist, können im wesentlichen beliebig viele solche Grundplatten 4 zu einer elektrofluidischen Einheit miteinander verbunden werden. Jede Grundplatte 4 kann dann wenigstens ein Wegeventil 3 aufnehmen.

Durch die Grundplatten 4 gehen parallele Bohrungen 5 und 5a hindurch, die mit den entsprechenden Bohrungen angeschlossener Grundplatten 4 fluchten und die fluidische Leitungen insbesondere für eine fluidische Hauptzuführleitung 5a bilden. Jede Grundplatte 4 weist zudem gemäss Fig. 2 an einer Unterseite 23 oder einer Stirnseite 28 Anschlüsse 16 auf, beispielweise für Arbeitsleitungen, die zu einem Verbraucher führen. Wie ersichtlich, sind die Leitungen 5 und 5a über Leitungen 5b mit Ventilleitungen 17 verbunden. Die fluidische Hauptzuführleitung 5a ist zudem mit einer fluidischen Versorgungsleitung 9 für einen E-P-Wandler 7 verbunden. Diese Versorgungsleitung 9 ist gemäss Fig. 1 und 3 eine in die Aussenseite 20 eingearbeitete Nut, die mittels der Dichtung 19 bei aneinandergelegten Grundplatten 4 gegen aussen abgedichtet ist. Mittels der Dichtung 19 ist zudem ein Abluftkanal 32 des E-P-Wandlers nach aussen abgedichtet. Werden somit zwei Grundplatten 4 miteinander verbunden, so entsteht zwischen diesen ohne weitere Massnahmen eine fluidische Versorgungsleitung 9, die von der fluidischen Hauptzuführleitung 5a zu einem E-P-Wandler 7 führt, der in einer Ausnehmung 24 der Grundplatte 4 untergebracht ist. Jede Grundplatte 4 weist zudem mindestens eine fluidische Steuerleitung 8 auf, welche mindestens einen E-P-Wandler 7 dieser Grundplatte 4 mit einer Ventilleitung 17a des angeflanschten Wegeventils 3 verbinden. Jede Grundplatte 4 weist somit einen E-P-Wandler 7 auf, der über eine fluidische Versorgungsleitung 9 mit der Hauptzuführleitung 5a und über eine fluidische Steuerleitung 8 mit dem Wegeventil 3 fluidisch verbunden ist. Zum Herstellen der fluidischen Versorgungsleitung 9 kann an die Seite 20 ausser einer weiteren Grundplatte 4 auch eine hier nicht gezeigte einfache Endplatte angesetzt sein, die zugleich eine sogenannte Speiseplatte sein kann.

Der in jeder Grundplatte 4 vorhandene E-P-Wandler 7 ist über Leitungen 26 direkt mit einer Leiterplatte 12 verbunden und kann ein an sich bekanntes elektromagnetisches 3/2-Wegeventil oder ein piezoelektrisches Ventil sein. Auf der Leiterplatte 12 sind zudem die Verbindungsmittel 11 angebracht. Diese Verbindungsmittel 11 bestehen jeweils aus einem Stecker und einer Buchse, die an gegenüberliegenden Seiten 20 und 21 angeordnet sind. Auf der Leiterplatte 12 können zudem ein Funkenlöschglied 13 sowie eine Leuchtdiode 14 als Schaltanzeige angebracht sein. Die Leiterplatte 12 kann zudem eine Leiterplatte sein, die serielle Signale verarbeiten kann, wobei in diesem Fall lediglich noch vier Kontakte an den Verbindungsmitteln 11 erforderlich sind. Busfähige Leiterplatten sind an sich bekannt und brauchen hier deshalb nicht näher erläutert zu werden. Der E-P-Wandler 7, die Verbindungsmittel 11 und die Leiterplatte 12 bilden vorzugsweise eine Einheit 2, die durch eine Oeffnung 30 auf der Seite 20 in die Ausnehmung 24 eingesetzt ist. Zur Befestigung dieser Einheit 2, mittels Befestigungsschrauben 30, sind jeweils an einer Stirnseite 27 Oeffnungen 29 vorgesehen. Diese werden nach dem Montieren mit Verschlusszapfen 25 verschlossen. Neben dem Wegeventil 3 können auf der Oberseite 18 Sensoranschlüsse 15 angebracht sein, die in geeigneter Weise mit einer Einheit 2 verbunden sind. In jeder Grundplatte 4 ist somit ein E-P-Wandler 7 angeordnet, der jeweils über eine Leiterplatte 12 bzw. Verbindungsmittel 11 mit den elektrischen Versorgungs- und/oder Steuerleitungen verbunden ist und der zudem fluidisch über eine Versorgungsleitung 9 mit der Hauptzuführleitung 5a und über eine Steuerleitung 8 mit dem Wegeventil 3 sowie über eine Entlüftungsleitung mit dem Abluftkanal 32 verbunden ist. Zwischen dem Wegeventil 3 und der Grundplatte 4 ist somit lediglich eine fluidische Schnittstelle 10 erforderlich. Eine elektrische Schnittstelle zwischen dem Wegeventil 3 und der Grundplatte 4 ist entbehrlich, da wie erwähnt der E-P-Wandler 7 direkt mit der Leiterplatte 12 und über die Verbindungsmittel 11 mit benachbarten Grundplatten 4 verbindbar ist. Die Leiterplatte 12 kann bezüglich der Ausführung der Verbindungen zu entsprechenden Leiterplatten 12 benachbarter Grundplatten 4 unterschiedlich gestaltet sein. So besteht die Möglichkeit, des jeweils versetzt Verbindens der verschieden weiterführenden Kontakte oder des gerade-durch-verbindens mit einem Wahlschalter (DIP-Switch, Jumper, Codierschalter) wobei die Leitung auf den E-P-Wandler geschaltet wird. Die Herstellung solcher Leiterplatten ist dem Fachmann an sich bekannt.

Da die Einheit 2 in einer Ausnehmung 24 der Grundplatte 4 untergebracht ist, ist der E-P-Wandler 7 ohne weitere Massnahmen gegen berühren und eindringen von Feuchtigkeit geschützt.

Bei der Ausführungsvariante gemäss Fig. 4 besteht gegenüber der oben beschriebenen Ausführung der Unterschied, dass die Verbindungsmittel 11 innenseitig an einem Deckel 31 angebracht sind und dieser Deckel 31 gleichzeitig eine Leiterplatte bildet, welche die oben genannte Leiterplatte 12 ersetzt. Die Leiterbahnen sind direkt auf den Deckel 31 aufgebracht und mit den Verbindungsmitteln 11 elektrisch verbunden. Innen am Deckel 31 können ausser den Leiterbahnen gleichzeitig Funkenlöschglieder und Leuchtdioden angebracht sein. Der E-P-Wandler 7 ist vorzugsweise über eine hier nicht gezeigte Steckverbindung mit dem Deckel 31 bzw. den Leiterbahnen verbunden. Der Deckel 4 ist beispielsweise mittels einer hier nicht gezeigten Rastverbindung mit der Grundplatte 4 verbunden. Diese Ausführungsvariante ist besonders montagefreunlich und günstig in der Herstellung.

## Patentansprüche

1. Fluidische Ventileinheit mit einem E-P-Wandler (7) zum Betätigen eines Wegeventils (3), das auf einer fluidische Kanäle (5) aufweisenden Grundplatte (4) angeordnet ist, welche Grundplatte Mittel (6) zum Verbinden mit weiteren Grundplatten (4) aufweist und in der elektrische Versorgungs- und/oder elektrische Steuerleitungen verlaufen und diese Leitungen Mittel (11) zum elektrischen Verbinden mit Leitungen angeschlossener Grundplatten aufweisen, dadurch gekennzeichnet, dass der E-P-Wandler (7) in der Grundplatte (4) oder einer seitlichen Erweiterung der Grundplatte (4) angeordnet und mit den elektrischen Versorgungs- und/oder Steuerleitungen, einer fluidischen Versorgungsleitung (9) und einer zur Anschlussstelle des Wegeventils (3) führenden fluidischen Steuerleitung (8) verbunden ist.

2. Ventileinheit nach Anspruch 1, dadurch gekennzeichnet, dass der E-P-Wandler (7) direkt mit einer Leiterplatte (12) elektrisch verbunden ist.

3. Ventileinheit nach Anspruch 2, dadurch gekennzeichnet, dass auf der Leiterplatte (12) Verbindungsmittel (11) zum Verbinden mit weiteren Leiterplatten (12) angeordnet sind.

4. Ventileinheit nach Anspruch 2 oder 3, dadurch gekennzeichnet, dass auf der Leiterplatte (12) Funkenlöschglieder (13) und/oder Schaltanzeigen (14) angebracht sind.

5. Ventileinheit nach einem der Ansprüche 2 bis 4, dadurch gekennzeichnet, dass auf der Leiterplatte (12) Logikelemente angeordnet sind mit denen serielle Signale verarbeitbar sind.

6. Ventileinheit nach einem der Ansprüche 2 bis 4, dadurch gekennzeichnet, dass weiterführende Kontakte der Leiterplatte (12) versetzt verbindbar sind.

7. Ventileinheit nach einem der Ansprüche 1 bis 6, dadurch gekennzeichnet, dass wenigstens eine Versorgungsleitung (9) und/oder Steuerleitung in einer Seitenfläche (20) der Grundplatte (4) verläuft.

8. Ventileinheit nach einem der Ansprüche 1 bis 7, dadurch gekennzeichnet, dass das Wegeventil (3) ein rein fluidisch angesteuertes Ventil ist.

9. Ventileinheit nach einem der Ansprüche 1 bis 8, dadurch gekennzeichnet, dass eine einzige fluidische Schnittstelle (10) zwischen Wegeventil (3) und Grundplatte (4) vorgesehen ist.

10. Ventileinheit nach einem der Ansprüche 1 bis 9, dadurch gekennzeichnet, dass die Grundplatte (4) eine Ausnehmung (24) aufweist, in welche der E-P-Wandler (7) eingesetzt ist.

11. Ventileinheit nach einem der Ansprüche 1 bis 10, dadurch gekennzeichnet, dass der E-P-Wandler (7), die elektrischen Leitungen und die elektrischen Verbindungsmittel eine Einheit (2) bilden.

12. Ventileinheit nach Anspruch 11, dadurch gekennzeichnet, dass die Einheit (2) eine Leiterplatte (12) aufweist, und dass auf der Grundplatte (4) Sensoranschlüsse (15) angeordnet sind, deren Signalleitungen auf der Leiterplatte (12) verlaufen.

13. Ventileinheit nach einem der Ansprüche 1 bis 12, dadurch gekennzeichnet, dass die Grundplatte (4) einen Deckel (31) aufweist, der als Leiterplatte ausgebildet ist und an dem die Mittel (11) zum elektrischen Verbinden mit Leitungen angeschlossener Grundplatten angebracht sind (Fig. 4).

## Claims

1. Fluidic valve unit having an electropneumatic converter (7) for the purpose of actuating a directional-control valve (3) which is disposed on a base plate (4) comprising fluidic ducts (5), wherein the said base plate comprises means (6) for connecting to other base plates (4), furthermore electric supply lines and/or electric control lines extend in the said base plate and these lines comprise means (11) for providing an electric connection to lines of connected base plates, characterised in that the electropneumatic converter (7) is disposed in the base plate (4) or in a lateral extension of the base plate (4) and is connected to the electric supply and/or control lines, to a fluidic supply line (9) and a fluidic control line (8) leading to the connection point of the directional-control valve (3).

2. Valve unit according to claim 1, characterised in that the electropneumatic converter (7) is electrically connected directly to a printed circuit board (12).

3. Valve unit according to claim 2, characterised in that connecting means (11) are disposed on the printed circuit board (12) for the purpose of connecting to other printed circuit boards (12).

4. Valve unit according to claim 2 or 3, characterised in that blow-out elements (13) and/or trip indications (14) are disposed on the printed circuit board (12).

5. Valve unit according to any one of claims 2 to 4, characterised in that logic elements are disposed on the printed circuit board (12) by means of which logic elements serial signals can be processed.

6. Valve unit according to any one of claims 2 to 4, characterised in that transmission contacts can be connected in a staggered manner to the printed circuit board (12).

7. Valve unit according to any one of claims 1 to 6, characterised in that at least one supply line (9) and/or control line extends in a side face (20) of the base plate (4).

8. Valve unit according to any one of claims 1 to 7, characterised in that the directional-control valve (3) is a valve which is controlled in a purely fluidic manner.

9. Valve unit according to any one of claims 1 to 8, characterised in that a single fluidic interface (10) is provided between the directional-control valve (3) and the base plate (4).

10. Valve unit according to any one of claims 1 to 9, characterised in that the base plate (4) comprises a recess (24) in which the electropneumatic converter (7) is inserted.

11. Valve unit according to any one of claims 1 to 10, characterised in that the electropneumatic converter (7), the electric lines and the electric connecting means form one unit (2).

12. Valve unit according to claim 11, characterised in that the unit (2) comprises a printed circuit board (12) and that disposed on the base plate (4) are sensor connections (15) whose signal lines extend on the printed circuit board (12).

13. Valve unit according to any one of claims 1 to 12 characterised in that the base plate (4) comprises a cover (31) which is formed as a printed circuit board and to which are attached the means (11) for the purpose of providing an electrical connection to lines of connected base plates. (Fig. 4).

## Revendications

1. Bloc de soupape fluidique comportant un convertisseur E-P (7) pour actionner un distributeur (3), qui est disposé sur une plaque de base (4) comportant des canaux fluidiques (5) et possédant des moyens (6) destinés à être raccordés à d'autres plaques de base (4) et dans lesquelles s'étendent des lignes d'alimentation électrique et/ou des lignes de commande électriques, ces lignes comportant des moyens (11) pour relier électriquement des plaques de base raccordées par des lignes, caractérisé en ce que le convertisseur E-P (7) est disposé dans une plaque de base (4) ou dans une extension latérale de la plaque de base (4) et est relié aux lignes d'alimentation et/ou de commande électrique, à une canalisation d'alimentation fluidique (9) et à une canalisation fluidique de commande (8) aboutissant au point de raccordement du distributeur (3).

2. Bloc de soupape selon la revendication 1, caractérisé en ce que le convertisseur E-P (7) est raccordé électriquement directement à une plaquette à circuits imprimés (12).

3. Bloc de soupape selon la revendication 2, caractérisé en ce que sur la plaquette à circuits imprimés (12) sont disposés des moyens de liaison (11) destinés à établir une liaison avec d'autres plaquettes à circuits imprimés (12).

4. Bloc de soupape selon la revendication 2 ou 3, caractérisé en ce que des étouffeurs d'étincelles (13) et/ou des unités d'affichage de commutation (14) sont disposés sur la plaquette à circuits imprimés (12).

5. Bloc de soupape selon l'une des revendications 2 à 4, caractérisé en ce que sur la plaquette à circuits imprimés (12) sont disposés des éléments logiques, à l'aide desquels des signaux en série peuvent être traités.

6. Bloc de soupape selon l'une des revendications 2 à 4, caractérisé en ce que des contacts de retransmission de la plaquette à circuits imprimés (12) peuvent être raccordés d'une manière décalée.

7. Bloc de soupape selon l'une des revendications 1 à 6, caractérisé en ce qu'au moins une ligne d'alimentation (9) et/ou une ligne de commande s'étend dans une surface latérale (20) de la plaque de base (4).

8. Bloc de soupape selon l'une des revendications 1 à 7, caractérisé en ce que le distributeur (3) est une soupape commandée d'une manière purement fluidique.

9. Bloc de soupape selon l'une des revendications 1 à 8, caractérisé en ce qu'une seule interface fluidique (10) est prévue entre le distributeur (3) et la plaque de base (4).

10. Bloc de soupape selon l'une des revendications 1 à 9, caractérisé en ce que la plaque de base (4) comporte un évidement (24), dans lequel est inséré le convertisseur E-P (7).

11. Bloc de soupape selon l'une des revendications 1 à 10, caractérisé en ce que le convertisseur E-P (7), les lignes électriques et les moyens de liaison électriques forment une unité (2).

12. Bloc de soupape selon la revendication 11, caractérisé en ce que l'unité (2) possède une plaquette à circuits imprimés (12), et que sur la plaque de base (4) sont disposées des bornes (15) de capteurs, dont les lignes de transmission de signaux s'étendent sur la plaquette à circuits imprimés (12).

13. Bloc de soupape selon l'une des revendications 1 à 12, caractérisé en ce que la plaque de base (4) possède un couvercle (31), qui est agencé sous la forme d'une plaquette à circuits imprimés et sur laquelle sont disposés des moyens (11) servant à réaliser le raccordement électrique avec des lignes de plaques de base raccordées (figure 4).
